Europäisches Patentamt

European Patent Office

Office européen des brevets

(11) Numéro de publication : **0 046 111 B1**

(12) **FASCICULE DE BREVET EUROPÉEN**

(45) Date de publication du fascicule du brevet : 18.01.84

(21) Numéro de dépôt : 81401254.8

(22) Date de dépôt : 04.08.81

(51) Int. Cl.³ : **F 16 C 32/06, F 16 C 29/02**

(54) **Dispositif hydrostatique de support.**

(30) Priorité : 07.08.80 FR 8017452

(43) Date de publication de la demande :
17.02.82 Bulletin 82/07

(45) Mention de la délivrance du brevet :
18.01.84 Bulletin 84/03

(84) Etats contractants désignés :
**BE CH DE FR GB IT LI NL**

(56) Documents cités :
**CH-A- 415 188**
**FR-A- 1 353 247**

(73) Titulaire : **Centre d'Etudes et de Recherches de la
Machine-Outil (C.E.R.M.O.)
150 boulevard Bineau
F-92200 Neuilly-sur-Seine (FR)**

(72) Inventeur : **Lombard, Jean Gaston
5, rue Mahias
F-92100 Boulogne-sur-Seine (FR)**

(74) Mandataire : **Hoisnard, Jean-Claude et al
Cabinet Beau de Loménie 55, rue d'Amsterdam
F-75008 Paris (FR)**

Dispositif hydrostatique de support

Les applications des patins hydrostatiques sont nombreuses et connues, dans la réalisation, notamment, de glissières rectilignes ou circulaires de machines-outils, et permettent l'obtention de grandes précision et régularité des déplacements relatifs de deux corps, et, une réduction très importante des forces de frottement, ce qui est un avantage certain lorsque les charges, que supportent ces glissières, sont grandes.

Les patins hydrostatiques sont alimentés en un fluide sous pression — huiles spéciales ou gaz comprimé — qui permet de constituer un film fluide épais entre les faces opposées des glissières, supprimant l'influence dans le guidage, des irrégularités de surfaces de ces deux faces.

Le seul poids de la pièce supérieure ne permet pas toujours de constituer une charge permanente suffisante pour réunir les conditions de bon fonctionnement des patins hydrostatiques. C'est pourquoi, pour pouvoir réaliser une charge réglable et/ou contrôlable desdits patins, il a déjà été prévu d'en compléter l'installation par des électro-aimants aptes à développer une force d'attraction magnétique, de préférence réglable, entre les éléments supportés par le ou les patins hydrostatiques (FR-A-1 353 247).

Il convient cependant de pouvoir démagnétiser les pièces en présence, afin notamment, dans l'application des patins hydrostatiques à la réalisation de machines-outils, d'éviter l'adhérence des copeaux métalliques d'usinage aux glissières de guidage de telles machines-outils.

L'invention permet d'obtenir ce résultat, en ayant donc pour objet un dispositif hydrostatique de support disposé entre deux éléments mobiles l'un par rapport à l'autre, comprenant au moins un patin hydrostatique, cependant qu'un aimant au moins est monté sur un premier desdits éléments, en regard du deuxième de ces éléments, de manière que ce deuxième élément soit traversé par les lignes des forces magnétiques d'attraction du deuxième élément vers le premier élément.

Ce dispositif comporte un circuit de démagnétisation associé à chaque aimant et constitué par un électro-aimant alimenté en courant alternatif.

Les avantageuses dispositions suivantes sont, en outre, préférentiellement adoptées :

— les pôles de l'électro-aimant de démagnétisation s'étendent au-delà de chaque patin hydrostatique et sont disposés en retrait par rapport à la face active de ce patin ;

— un aimant est associé à chaque patin hydrostatique, est monté sensiblement symétriquement par rapport à un plan médian de ce patin hydrostatique, perpendiculaire à la direction du déplacement relatif des deux éléments, et, comporte une armature en U, dont les extrémités des deux branches débouchent dans la poche de pression du patin hydrostatique, en étant légèrement en retrait, à l'intérieur de cette poche, de la ligne joignant les bords opposés de la lisière délimitant ladite poche ;

— chaque aimant est un électro-aimant dont la bobine est raccordée à un dispositif de réglage de l'intensité du courant électrique d'aimantation.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels :

la figure 1 est une coupe, perpendiculaire au plan de déplacement relatif, d'un dispositif conforme à l'art antérieur ;

la figure 2 est une vue suivant II-II de la figure 1 ; et,

les figures 3 et 4 sont des coupes, analogues à celles des figures 1 et 2, d'une réalisation d'un dispositif conforme à l'invention.

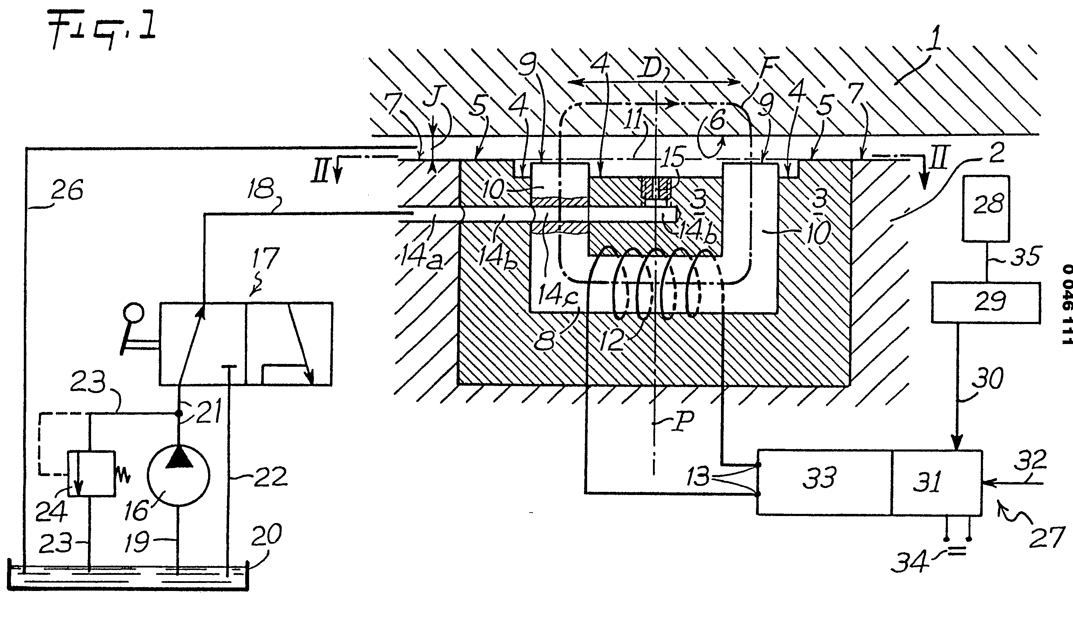

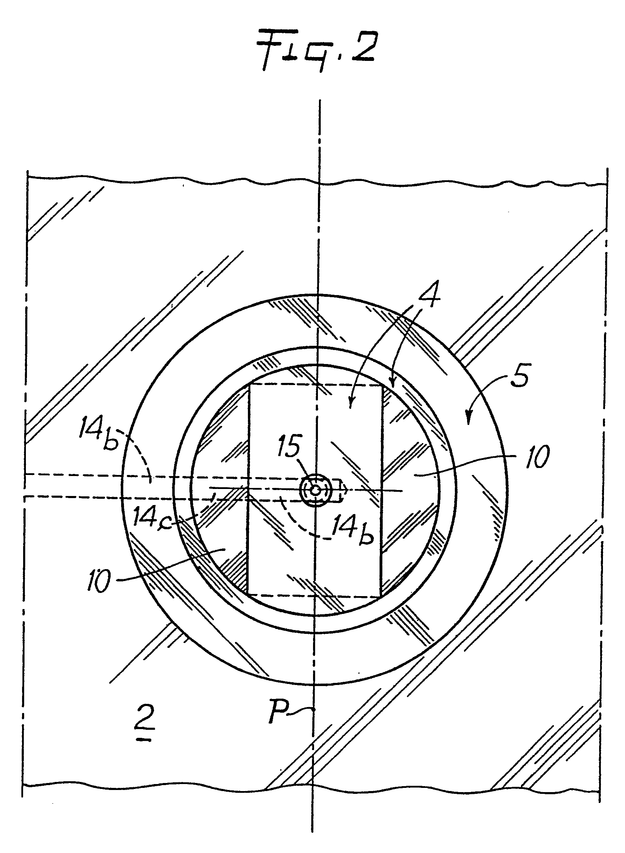

Selon la réalisation des figures 1 et 2, deux éléments 1 et 2 sont montés mobiles, l'un par rapport à l'autre, en étant susceptibles de glissements relatifs, parallèlement à la direction D. L'élément 1 constitue, par exemple, le chariot mobile d'une machine-outil, l'élément 2 constituant le support de ce chariot.

Plusieurs patins hydrostatiques sont interposés entre les éléments 1 et 2, l'un deux étant représenté et étant constitué par :

— le corps 3 du patin, fixe par rapport à l'élément 2,

— une cavité 4, qui est ménagée dans le corps 3 et débouche dans la face 5 de ce corps, qui est parallèle à une face 6 de l'élément 1 et qui, en outre, affleure la face 7 de l'élément 2 parallèle à cette face 6, les faces 5, 6 et 7 étant en outre parallèles à la direction D,

— l'armature 8 d'un électro-aimant, conformée en un U, dont les tranches 9 des extrémités des branches 10 sont parallèles à la face 5 du corps 3, et légèrement en retrait du plan 11 recouvrant la cavité 4 et passant par cette face 5, ces branches 10 débouchant en outre dans la cavité 4,

— l'enroulement 12 de l'électro-aimant muni de ses bornes 13 de raccordement,

— Un conduit de fluide à plusieurs tronçons 14a, 14b, 14c, qui débouche dans la cavité 4,

— une restriction 15, qui est disposée sur le tronçon 14b, qui débouche dans la cavité 4, avant cette cavité,

— une pompe 16,

— un distributeur 17 à deux positions,

— un conduit 18 reliant le distributeur 17 au tronçon 14a,

— le conduit d'aspiration 19 de la pompe 16, reliant ladite pompe à un réservoir 20 de fluide,

— le conduit de refoulement 21 de la pompe 16, reliant cette pompe au distributeur 17,

— un conduit 22, reliant le distributeur 17 au réservoir 20,

— un conduit 23, reliant le conduit de refoulement 21 au réservoir 20, et,

— un clapet taré de décharge 24, disposé sur ledit conduit 23.

Les tronçons 14a, 14b et 14c sont ménagés :

— le tronçon 14a dans l'élément 2,

— le tronçon 14b, en deux parties séparées par l'une des branches 10 de l'électro-aimant, dans le corps 3 du patin,

— le tronçon 14c, dans ladite branche 10 de l'électro-aimant, afin de relier les deux parties du tronçon 14b.

Les deux positions du distributeur 17 correspondent :

— la première position, à la mise en communication des conduits 21 et 18, et, à l'obturation du conduit 22 ; et,

— la deuxième position, à la mise en communication des conduits 18, 21 et 22.

Il est bon de noter la symétrie qui existe par rapport au plan P perpendiculaire à la direction D : les branches 10 de l'électro-aimant sont disposées symétriquement, par rapport à ce plan, et, de part et d'autre dudit plan, cependant que le corps 3 du patin, et, la cavité 4 qu'il comporte, sont cylindriques, circulaires, le plan P en constituant un plan diamétral passant en outre, par l'axe de la restriction 15.

Naturellement, un jeu J existe entre les faces 5 et 7 d'une part, et, la face 6, d'autre part, un film fluide traversant ce jeu et s'écoulant de la cavité 4 vers l'extérieur de cette cavité, faisant, par exemple, retour au réservoir 20 par un conduit de retour 26.

Les bornes 13 de l'électro-aimant sont raccordées à un dispositif 27 de réglage de l'intensité du courant d'aimantation. Ce réglage peut être manuel, mais peut également être automatique et constituer un véritable asservissement en position des éléments 1 et 2, l'un par rapport à l'autre, comprenant notamment : un capteur de position 28 de ces deux éléments, un pont de mesure 29 raccordé (35) à ce capteur 28, et émettant un signal 30, un dispositif de régulation 31, qui reçoit le signal 30 et un signal de consigne 32, et, qui, par l'intermédiaire d'un amplificateur de puissance électrique 33 est raccordé aux bornes 13. Une source d'énergie électrique 34 alimente la totalité des organes du dispositif de réglage 27.

Avec les dispositions constructives qui ont été décrites, on comprend bien qu'en outre, il est nécessaire que l'élément 1 soit réalisé en un matériau magnétique, ou magnétisable, afin de permettre aux lignes de force F de l'électro-aimant de traverser ledit élément et d'y développer une force d'attraction vers l'élément 2.

Lorsque le distributeur 17 est placé dans sa première position, le patin hydrostatique assure la fonction de guidage et de support qui est la sienne. Si, en outre, l'électro-aimant est alimenté en énergie électrique, une force d'attraction de l'élément 1 vers l'élément 2 est développée, ce qui a pour résultat de limiter la valeur maximale du jeu J et d'optimiser le fonctionnement du patin hydrostatique, tant en ce qui concerne la précision du guidage, qu'en ce qui concerne les conditions régissant l'établissement du film fluide dans le jeu J.

Quand un dispositif de réglage 27 est prévu, il est apte à réguler la valeur de l'intensité du courant d'aimantation, permettant alors l'obtention d'une sensible constance de la valeur du jeu J.

Parfois, l'absence de variations importantes de la charge agissant sur l'élément 1 rend inutile la régulation. Dans ce cas, un simple aimant permanent suffit à la place de l'électro-aimant représenté.

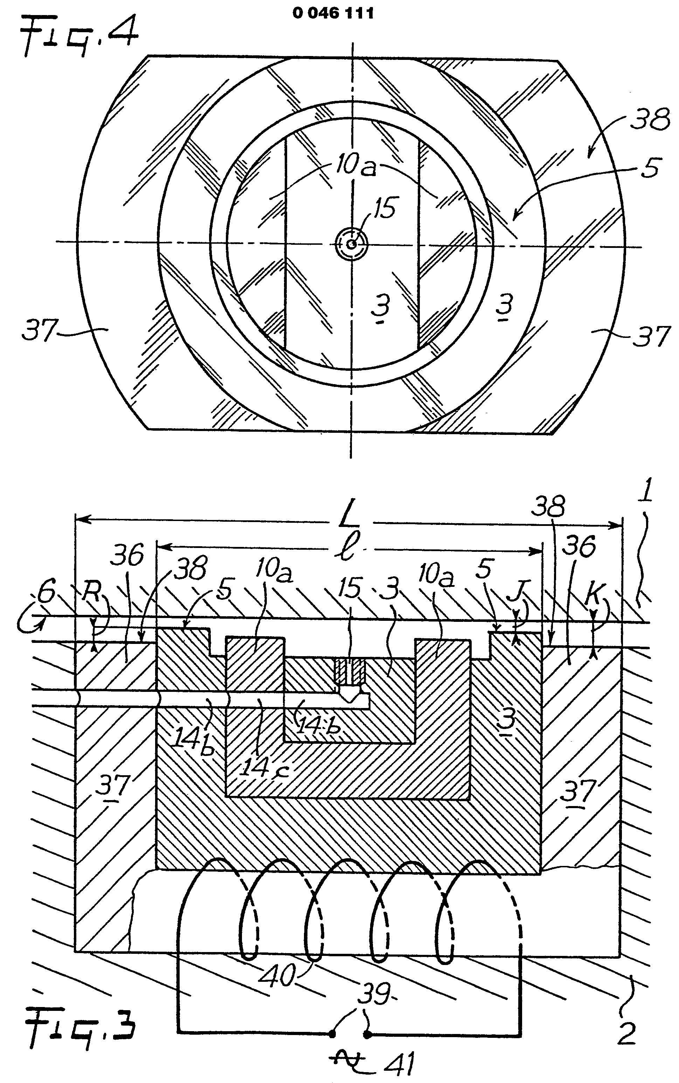

Les figures 3 et 4 représentent une réalisation dans laquelle l'électro-aimant principal précédemment décrit est remplacé par un aimant principal simple, permanent, en U à deux branches 10a. Dans cette variante, on note, par contre, qu'un électro-aimant, dit secondaire, de grandes dimensions a ses pôles 36 qui encadrent le corps 3 du patin. La largeur maximale L des branches 37 de cet électro-aimant est supérieure à la largeur maximale 1 du patin. Par ailleurs, les faces 38 des pôles 36 sont en retrait R par rapport à la face 5 du patin hydrostatique, ménageant, de ce fait entre elles et la face 6 de l'élément 1, un jeu K notablement supérieur au jeu J. Cet électro-aimant secondaire a les bornes 39 de sa bobine 40 reliées à une source de courant alternatif 41.

Le fonctionnement obtenu avec cette réalisation est analogue à celui déjà décrit relatif à la réalisation des figures 1 et 2, avec, en outre, l'avantage correspondant à la présence de l'électro-aimant secondaire (37-40). Celui-ci a une fonction de démagnétisation de la matière délimitant la face 6 de l'élément 1, et remplit sa fonction grâce à la caractéristique alternative de son courant d'alimentation. Ainsi, les copeaux métalliques résultant de l'usinage par la machine-outil comportant une telle glissière ne risquent plus d'adhérer en permanence à la face 6 de l'élément 1, ce qui supprime un inconvénient important du patin mixte hydro-magnétique antérieurement connu.

## Revendications

1. Dispositif hydrostatique de support disposé entre deux éléments (1, 2) mobiles l'un par rapport à l'autre, comprenant au moins un patin hydrostatique (3), cependant qu'un aimant (10a) au moins est monté sur un premier desdits éléments, en regard du deuxième de ces éléments, de manière que ce deuxième élément soit traversé par les lignes des forces magnétiques d'attraction du deuxième élément vers le premier élément, caractérisé en ce qu'il comporte un circuit de démagnétisation (36-41) associé à chaque aimant et constitué par un électro-aimant alimenté en courant alternatif.

2. Dispositif hydrostatique selon la revendication 1, caractérisé en ce que les pôles (36) de l'électro-aimant de démagnétisation s'étendent au-delà de chaque patin hydrostatique et sont disposés en retrait par rapport à la face active de ce patin.

3. Dispositif hydrostatique selon l'une quelconque des revendications 1 et 2, caractérisé en ce qu'un aimant (10a) est associé à chaque patin hydrostatique, est monté sensiblement symétriquement par rapport à un plan médian de ce patin hydrostatique, perpendiculaire à la direction du déplacement relatif des deux éléments, et, comporte une armature en U, dont les extrémités des deux branches débouchent dans la poche de pression du patin hydrostatique en étant légèrement en retrait, à l'intérieur de cette poche, de la ligne joignant les bords opposés de la lisière délimitant ladite poche.

4. Dispositif hydrostatique selon l'une quelconque des revendications 1 à 3, caractérisé en ce que chaque aimant est un électro-aimant dont la bobine est raccordée à un dispositif de réglage de l'intensité du courant électrique d'aimantation.

**Claims**

1. Hydrostatic support device placed between two elements (1, 2) movable one with respect to the other, comprising at least one hydrostatic guide-block (3), whereas at least one magnet (10a) is mounted on a first one of the said elements, opposite the second of said elements, so that said second element is traversed by the lines of magnetic forces pulling the second element towards the first element, characterized in that it comprises a demagnetizing circuit (36-41) associated to each magnet, and constituted by an A.C.-supplied electro-magnet.

2. Hydrostatic device according to claim 1, characterized in that the poles (36) of the demagnetizing electro-magnet extend beyond each hydrostatic guide-block and are offset with respect to the active face of said guide-block.

3. Hydrostatic device according to claim 1 or 2, characterized in that a magnet (10a) is associated to each hydrostatic guide-block, is mounted substantially symmetrically with respect to a median plane of the said hydrostatic guide-block perpendicular to the direction of relative movement of the two elements, and comprises a U-shaped armature, the ends of the two branches of which issue into a pressure pocket of the hydrostatic guide-block whilst being slightly offset inside said pocket from the line joining the opposite edges of the border delimiting the said pocket.

4. Hydrostatic device according to any one of claims 1 to 3, characterized in that each magnet is an electro-magnet whose coil is connected to a device for adjusting the intensity of the magnetizing current.

**Ansprüche**

1. Hydrostatische Abstützung, die zwischen zwei gegeneinander beweglichen Elementen (1, 2) eingesetzt ist, mit zumindest einer hydrostatischen Gleitkufe (3), wobei zumindest ein Magnet (10a) auf einem ersten der beiden Elemente gegenüber dem zweiten dieser Elemente derart angeordnet ist, daß dieses zweite Element von den magnetischen Kraftlinien, die das zweite Element zum ersten Element anziehen, durchflossen ist, dadurch gekennzeichnet, daß sie einen Entmagnetisierungskreis (36 bis 41) umfaßt, der mit jedem Magneten verbunden und durch einen mit Wechselstrom gespeisten Elektromagneten gebildet ist.

2. Hydrostatische Abstützung nach Anspruch 1, dadurch gekennzeichnet, daß sich die Pole (36) des Elektromagneten zur Entmagnetisierung außerhalb jeder hydrostatischen Gleitkufe erstrecken und in bezug auf die aktive Fläche dieser Kufe zurückversetzt sind.

3. Hydrostatische Abstützung nach einem der Ansprüche 1 und 2, dadurch gekennzeichnet, daß ein Magnet (10a) mit jeder hydrostatischen Gleitkufe verbunden und im wesentlichen symmetrisch zu einer senkrecht zur relativen Verschieberichtung der beiden Elemente vorgesehenen Mittelebene dieser hydrostatischen Gleitkufe angeordnet ist und einen U-förmigen Magnetanker umfaßt, dessen beide Schenkelenden in den Druckraum der hydrostatischen Gleitkufe münden, wobei sie im Inneren dieses Raumes gering zurückversetzt sind von der Linie, die die gegenüberliegenden Ränder des den Raum begrenzenden Saums verbindet.

4. Hydrostatische Abstützung nach einem der Ansprüche 1 bis 3, dadurch gekennzeichnet, daß jeder Magnet ein Elektromagnet ist, dessen Spule mit einer Einrichtung zur Regelung der Intensität des elektrischen Magnetisierungsstroms verbunden ist.

Fig.1

0 046 111

# Fig. 2

**Fig.4**

**Fig.3**